# EUROPEAN PATENT SPECIFICATION

(11) **EP 2 978 808 B1**
(45) Date of publication and mention of the grant of the patent: **26.12.2018**
(21) Application number: 14773101.2
(22) Date of filing: 13.03.2014
(51) Int. Cl.: C08L 33/08, C08L 13/00, C09J 113/00

(54) **ACRYLATE RUBBER SEALING MATERIAL**
DICHTUNGSMATERIAL AUS ACRYLATKAUTSCHUK
MATÉRIAU D'ÉTANCHÉITÉ DE CAOUTCHOUC D'ACRYLATE

(30) Priority: 25.03.2013 US 201361804936 P
(43) Date of publication of application: 03.02.2016
(73) Proprietor: 3M Innovative Properties Company, St. Paul, MN 55133-3427 (US)
(72) Inventor: BANDYOPADHYAY, Pradip K., Saint Paul, Minnesota 55133-3427 (US)
(74) Representative: Herzog, Fiesser & Partner Patentanwälte PartG mbB
(86) International application number: PCT/US2014/026158
(87) International publication number: WO 2014/160251

(56) References cited:
- CN-A- 102 731 987
- US-A- 3 450 681
- US-A- 3 450 681
- US-A- 5 134 182
- US-A- 5 134 182
- US-A- 5 753 318
- US-A1- 2004 106 732
- TARR, M.: 'Dielectric Properties.' 04 February 2012, pages 1 - 3, XP055291790 Retrieved from the Internet: <URL:http://www.ami.ac.uk/courses/topics/01 84_dp>
- SCHONHALS, A.: 'Dielectric Spectroscopy on the Dynamics of Amorphous Polymeric Systems. Novocontrol GmbH' APPLICATION NOTE DIELECTRICS vol. 1, 1998, pages 1 - 17, XP055280605 Retrieved from the Internet: <URL:http://novocontrol.de/pdf_s/APND1.PDF>
- SHAN, GR ET AL.: 'Oil-Absorption Function of Physical Crosslinking in the High-Oil-Absorption Resins.' JOURNAL OF APPLIED POLYMER SCIENCE vol. 90, 2003, pages 3945 - 3950, XP055280608

## Description

### TECHNICAL FIELD

This invention relates to an acrylate rubber sealing material.

### BACKGROUND

US 3,450,681 discloses curable acrylate elastomers based on acrylate interpolymers prepared from butyl acrylate, alkoxyethyl or alkylthioethyl acrylate, and at least one other comonomer providing active cure sites, such as halogen groups, epoxy groups, or ethylenically unsaturated groups.

US 5,134,182 discloses a composition based upon a blend of lower alkyl or lower alkoxyalkyl polyacrylate ester elastomers with one or more materials selected from liquid butadiene acrylonitrile copolymers and halogenated fire-retardant plasticizers.

US 2004/106732 discloses a thermoplastic resin composition produced by compounding a thermoplastic resin or an elastomer with a block copolymer having at least one methacrylic ester polymer block and at least one acrylic ester polymer block.

CN 102 731 987 discloses a seal ring made of chlorine alcohol rubber, polyacrylate rubber, shellac paint, etc. after smelting, opening and refining, and obtained after the secondary vulcanization process.

Exposure of sealing materials to oil and/or high temperatures can cause detrimental changes in the material properties such as a decrease in adhesion, a decrease in mechanical strength, undesired flow increase and material loss by flow.

Commercially available products comprising sealing materials are described as mastics or mastic tapes made from self-adhesive rubber. These types of products find use in the electrical industry, such as in the area of power transmission and distribution. They are used to insulate, and seal out moisture from, fittings and edges of solid electrical wires. Mastic materials can be folded, stretched and molded around irregular forms to provide insulation, water sealing, and surface protection. They are known to provide some level of adhesion and chemical and moisture resistance and may be used in conjunction with vinyl tapes for optimum performance.

### SUMMARY

A continuing need exists for mastic sealing materials that perform well under high temperature conditions, e.g., 90°C, and in the presence of hydrocarbons. These conditions exist, for example, in splices and termination for oil-filled cables such as paper-insulated lead cables (PILC), in which the paper insulation is impregnated with oil.

The present invention provides a sealing material comprising: 20 to 70 wt% acrylate rubber component; 10 to 50 wt% rheological filler component; 5 to 40 wt% tackifier component; 5 to 30 wt% plasticizer component; 0.5 to 5 wt% antioxidant component; Up to 20 wt% dielectric filler component; and 5 wt% up to 20 wt% fluorinated thermoplasticcomponent, wherein the fluorinated thermoplastic component is polytetrafluoroethylene and wherein polytetrafluoroethylene is in the form of powder.

An advantage of at least one embodiment of the present invention is to maintain an oil-tight and water-tight seal in the presence of hydrocarbon oil, including at high temperatures.

The above summary of the present invention is not intended to describe each disclosed embodiment or every implementation of the present invention. The detailed description that follows below more particularly exemplifies illustrative embodiments.

### DETAILED DESCRIPTION

In the following description, reference is made to the accompanying set of drawings that form a part of the description hereof and in which are shown by way of illustration several specific embodiments. It is to be understood that other embodiments are contemplated and may be made without departing from the scope or spirit of the present invention. The following detailed description, therefore, is not to be taken in a limiting sense.

Unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range.

The sealing materials of the present invention are especially useful in splices and terminations for medium or high voltage power cables. In particular, the materials are uniquely useful in splices and termination for oil-filled cables such as paper-insulated lead cables (PILC), in which the paper insulation is impregnated with oil. The materials of the present invention may be used alone, e.g., placed under an insulating layer of a cable in the region of a semiconductive cutback, or may be used in conjunction with other components, for example as an environmental sealant for a cold shrinkable tube. The sealing materials of the present invention help to seal voids inside termination and splices in the presence of hydrocarbon oil at high temperatures and pressures, thus preventing any leakage of oil from inside the cable, as well as preventing any water from seeping into the cable.

Materials of the invention are typically prepared by mixing the ingredients and then pressing, extruding, injection molding, or calendaring the material into the final desired form. The final product can be provided as sheets, shaped articles, or in putty form, as desired for the application.

The sealing materials of the present invention comprise an acrylate rubber component. The acrylate rubber typically comprises monomers or copolymers of acrylic acid esters. Non-limiting examples of suitable acrylate rubbers include methyl acrylate, ethyl acrylate, propyl acrylate, butyl acrylate, pentyl acrylate, 2-ethylhexyl acrylate, octyl acrylate, dodecyl acrylate, cyanoethyl acrylate, and alkoxyalkyl acrylates including, for example, methoxyethyl acrylate, ethoxyethyl acrylate, butoxyethyl acrylate, ethoxypropyl acrylate, and combinations thereof.

The acrylate rubber component may also comprise crosslinking monomers such as, for example, vinyl chloroacetate, chloroethyl vinyl ether, allyl chloroacetate, and compounds containing epoxy groups such as glycidyl acrylate, glycidyl methacrylate, and allyl glycidyl ether.

The acrylate rubber component typically comprises 20 to 70 wt% of the sealing material. In some embodiments it comprises 25 to 40 wt% of the sealing material.

The sealing materials of the present invention may comprise fillers. Fillers may be added to influence properties such as dielectric and rheological properties. For descriptive purposes herein, such fillers are categorized, respectively, as dielectric fillers and rheological fillers. However, it is to be understood that these are not mutually exclusive categories and that fillers categorized as dielectric fillers may influence rheological properties and fillers categorized as rheological fillers may influence dielectric properties. The fillers may have any suitable shape such as spheres, plates, platelets, cubes, needles, oblate, spheroids, pyramids, prisms, flakes, rods, fibers, chips, whiskers, etc. or mixtures thereof.

Fillers that may influence dielectric properties include conductive materials, semi-conductive materials, and insulating materials. Non-limiting examples of suitable materials include, for example, titanates, oxides, borides, carbides, silicates, hydroxides, nitrides, perovskites, phosphides, sulfides, silicides. More particular examples include barium titanate, strontium titanate, barium strontium titanate, calcium copper titanate, titania, zinc oxide, zirconia, magnesia, cesium oxide, boron nitride, aluminum oxide, silicon oxide (for example silica), cerium oxide, copper oxide, calcium oxide, niobium pentoxide, tantalum pentoxide, lead zirconium oxide, lead zirconium titanium oxide, zinc oxide, and combinations thereof. These materials may be pure or may modified, such as by doping, or by adding other ingredients. Other suitable materials include insulating particles having conductive coatings; metals and metallic powders, for example aluminum, gold, silver, chromium, copper, palladium, nickel and alloys thereof; conductive and non-conductive carbon power include but are not limited to carbon black, N110, N990, carbon nanotube, and graphite. Examples of commercially available carbon black include but are not limited to those under trade names of BP2000, VXC72, VXC605, R660, and VULCAN XC72 from Cabot Co., USA; ENSACO 150 G, ENSACO260 G, and ENSACO 250 G from TIMCAL Graphites & Carbon Corp., Belgium. Carbon black is a preferred dielectric filler in many embodiments of the present invention.

Dielectric fillers typically comprises up to 20 wt% of the sealing material. In some embodiments they comprise up to 10 wt% of the sealing material.

Non-limiting examples of fillers that may influence rheological properties include clays, nanoclays, talc, inorganic salts such as calcium carbonate, hydroxides such as magnesium hydroxide, inorganic oxides such as magnesium oxide, and silicates such as magnesium silicates, aluminum silicates, and silica. Some silicas, such as those available under the trade name SACA C5 from Itatex Especialidades Minerais, Brazil, inhibit the release of oil (liquid) that may occur when the material is subjected to high temperatures.

Rheological fillers typically comprise 10 to 50 wt% of the sealing material. In some embodiments they comprise 15 to 40 wt% of the sealing material.

The sealing materials of the present invention comprise tackifiers. Non-limiting examples of suitable tackifiers include terpene resins, terpene phenolic resins, alpha-pinene phenol resins, esterified rosin and partially polymerized rosin, and nitrile rubber.

Tackifiers can regulate rheological properties of a material, such as, for example, tackiness, adhesion and wettability. Tackifier resins can be used to enhance workability of the material by reducing viscosity, increasing tackiness of unvulcanized mixtures and contributing to polymer auto-fusion.

Tackifier resins typically have a molecular weight generally between 500 and 2,000 and a softening point between 50°C and 150°C. Tackifier resins include pitch derivatives, terpenes, petroleum hydrocarbon resins, and modified phenolic resins.

To significantly increase adhesion power (tackiness) of the material, use of resins having low softening temperature may be desired. However, to obtain materials possessing high temperature resistance, tackifier resins having higher softening temperatures are typically needed. When the composition of the present invention is used in applications subjected to temperatures of approximately 90°C or greater, particularly suitable tackifier resins typically exhibit a softening temperature ranging from 90°C to 150°C, measured by Ring and Ball Test (ASTM D3461-76 Method).

The tackifier typically comprises 5 to 40 wt% of the sealing material. In some embodiments they comprise 10 to 30 wt% of the sealing material.

The sealing materials of the invention may comprise a plasticizer. Non-limiting examples of suitable plasticizers include aromatic based oils; citrates; cyclic olefins (such as polycyclopentadiene); polyalphaolefins (such as hydrogenated polymerized decene-1), hydrogenated terphenyls or other terpene derivatives; polypropylene oxide mono- and di-esters, cyclopentadiene copolymers with fatty acid esters; phosphate esters and mono-, di-, and poly-esters, (such as trimellitates, phthalates, benzoates, fatty acid ester derivatives, fatty acid ester alcohols, dimer acid esters, glutarates, adipates, sebacates, polymeric polyesters, rosin esters, acrylate esters, and epoxidized fatty acid esters), polyesters and polyethers such as adipates, phthalates, and azelates, e.g., dioctylphthalate, and dioctylazelate, and mixtures thereof.

The plasticizer typically comprises 5 to 30 wt% of the sealing material. In some embodiments it comprises 10 to 20 wt% of the sealing material.

The sealing materials of the invention may comprise an antioxidant. Non-limiting examples of suitable antioxidants include hindered phenols such as those available under the trade name IRGANOX 1010 from Ciba (now part of BASF), Germany and hindered amines such as those available under the trade name NAUGARD 445 from Chemtura Europe, Ltd, UK; and diphenyl disulfides.

The antioxidant typically comprises 0.5 to 5 wt% of the sealing material. In some embodiments it comprises 0.5 to 1 wt% of the sealing material.

The sealing materials of the invention comprise polytetrafluoroethylene (PTFE)in the form of powder. It is believed that the powder PTFE fibrillates during mixing. It is further believed that the fibrillated PTFE helps to hold the material together and influences its flow properties, thereby providing structural support and elasticity. It is further believed that the PTFE provides, at least in part, the material with tear-resistance and solvent resistance properties, but does not substantially increase its viscosity, which would adversely affect extrusion or molding of the sealing material.

The fluorinated thermoplastic PTFE comprises 5 wt% up to 20 wt% of the sealing material.

The sealing materials of the invention may comprise other additives, depending on the desired properties of the material and on other factors such as processing methods and conditions. Examples of other additives include dyes, pigments, flame retardants, and release aids so long as the addition does not negatively affect the dielectric properties of the sealing materials.

The sealing materials of the present invention preferably have a dielectric constant between 3 and 40 and a dielectric loss between 0.005 and 1, which makes them suitable for use in power cable splices and terminations. The sealing materials preferably have an oil absorption of less than 10%, more preferably less than 5%, and most preferably less than 1%, which makes them particularly suitable for use with oil-filled cables such as paper-insulated lead cables (PILC), in which the paper insulation is impregnated with oil.

The sealing materials of the present invention preferably have an elastic modulus of 65 KPa to 130 KPa at room temperature (approximately 23 °C) and 50 KPa to 120 KPa at 50 °C. The sealing materials of the present invention preferably have an elastic recovery of a minimum of 5% at 23 °C. These properties allow the sealing materials to be handled easily during application, behaving similar to a tape, but may also withstand elevated temperatures during storage. The sealing materials of the present invention preferably have a180° peel strength of at least 3 kg/m to stainless steel, at least 6 kg/m to copper, and at least 80 kg/m to lead, which makes them suitable for use with various types of power cables.

### EXAMPLES

The following examples are offered to aid in the understanding of the present invention and are not to be construed as limiting the scope thereof. Unless otherwise indicated, all parts and percentages are by weight. The following test methods and protocols were employed in the evaluation of the illustrative examples that follow.

### Materials List

| **PRODUCT NAME** | **DESCRIPTION** | **SOURCE** |
|---|---|---|
| HYTEMP PV04 | Acrylate Rubber | Zeon Chemicals, USA |
| HYTEMP 4052EP | Acrylate Rubber | Zeon Chemicals, USA |
| TRANSLINK 37 | Aluminosilicate Clay | BASF, USA |
| VULCAN XC72 | Carbon Black | Cabot Corporation, USA |
| SYLVARES TP2040HM | Phenolic Resin Tackifier | Arizona Chemical, USA |
| SP-1068 | Phenolic Resin Tackifier | SI Group, USA |
| THIOKOL TP-95 | Plasticizer | Dow Chemical, USA |
| THIOKOL TP-759 | Plasticizer | Dow Chemical, USA |
| NAUGARD 445 | Antioxidant | Chemtura, USA |
| ZONYL MP-1100 | Polytetrafluoroethylene | Dupont Chemical, USA |

### Sample Preparation

The compositions of the mastic materials of Examples 1-7 are provided in Table 1. All amounts in Table 1 are percentages are by weight. The mastic materials were prepared by adding the acrylate rubber, clay, carbon black, tackifier, antioxidant, and polytetrafluoroetheylene to a Banbury mixer at room temperature and mixing at 100 rpm for 5 minutes. The temperature was increased to 240 °F (115 °C) and the mixing speed was decreased to 40 rpm. The plasticizer was added and mixed for 1 minute. The mixing speed was increased to 120 rpm and the mastic material was mixed for 5 minutes. When the temperature of the material reached 220 °F (104 °C), the mixing was complete and the material was removed from the mixer.

**TABLE 1.**

| **COMPONENT** | **Ex.*1** | **Ex.*2** | **Ex.* 3** | **Ex. *4** | **Ex.*5** | **Ex.*6** | **Ex. 7** |
|---|---|---|---|---|---|---|---|
| HYTEMP PV04 | 39.64 | 37.74 | 35.94 | 34.14 | 0 | 0 | 0 |
| HYTEMP 4052EP | 0 | 0 | 0 | 0 | 29.90 | 30.26 | 28.61 |
| TRANSLINK 37 | 15.76 | 15.76 | 15.76 | 15.76 | 37.15 | 37.54 | 35.50 |
| VULCAN XC72 | 0 | 1.90 | 3.70 | 5.50 | 7.10 | 7.18 | 6.79 |
| SYLVARES TP2040HM | 28.32 | 28.32 | 28.32 | 28.32 | 0 | 0 | 0 |
| SP-1068 | 0 | 0 | 0 | 0 | 10.00 | 10.09 | 9.54 |
| THIOKOL TP-95 | 14.16 | 14.16 | 14.16 | 14.16 | 0 | 0 | 0 |
| THIOKOL TP-759 | 0 | 0 | 0 | 0 | 14.20 | 14.37 | 13.59 |
| NAUGARD 445 | 0.71 | 0.71 | 0.71 | 0.71 | 0.55 | 0.56 | 0.53 |
| ZONYL MP-1100 | 1.42 | 1.42 | 1.42 | 1.42 | 1.10 | 0 | 5.43 |

| | | | | | | | |
|---|---|---|---|---|---|---|---|
| *: not according to present invention | | | | | | | |

Sample plaques for measurement of electrical properties and oil resistance were molded in a hydraulic press at 150 °F (66 °C) by sandwiching the mastic material between sheets of silicone coated paper and pressing to a thickness of 100 mil (2.5 mm). Mastic samples for application onto cable splices were extruded through a slit die at 150 °F (66 °C) to produce a continuous strip of mastic having a width of about 1" (2.5 cm) and a thickness of 100 mil (2.5 mm). As the mastic was extruded, both sides were covered with silicone coated paper.

Mastic samples for adhesion testing were extruded between two sheets of liner into a strip having a width of about 0.75" (19 mm) and a thickness of 100 mil (2.5 mm) then cut into pieces 5.0" (12.7 cm) in length. Liner was removed from one side of the mastic, the mastic was placed on the metal surface, and pressure was applied to the liner-covered side of the mastic using a single pass of a 51b roller. One end of the metal plate was clamped in the lower jaw of the MTS tensile tester. An approximately 0.5" long section of the bottom end of the mastic strip was peeled from the metal plate and was bonded to a strip of polyester tape to make a 6" tail. The polyester was clamped into the upper jaw of the MTS tensile tester for measurement of 180° peel strength.

Samples for Dynamic Mechanical Analysis (DMA) and the elastic recovery test were prepared by pressing the material into plaques of appropriate thickness (3 mm for DMA, 1.5 mm for elastic recovery) in a hydraulic press at 200 °F (93 °C.) Discs were cut from the plaques using a die having a diameter of 25 mm.

### Test Methods

Dielectric Constant (Relative Permittivity, κ) and Dielectric Loss (Electrical Dissipation Factor, tanδ) were measured using the procedures specified in ASTM-D150-2004, "Standard Test Methods for AC Loss Characteristics and Permittivity (Dielectric Constant) of Solid Electrical Insulation."

Degree of oil absorption was measured by immersing a 2" X 4" (5 cm x 10 cm) strip of mastic of known weight in polybutene oil at 194 °F (90°C) for 4 days. Samples were removed from the oil, excess oil was removed, and the samples were weighed. Oil absorption was calculated as a percentage gain in weight after immersion.

The ability of the mastic material to seal the joint area of a PILC cable and to perform under high voltage conditions was evaluated using IEEE-404, "Extruded and Laminated Dielectric Shielded Cable Joints Rated 2.5 kV to 500 kV."

DMA was used to determine the storage modulus (G') and loss modulus (G") as a function of temperature using a Rheometrics RSA-2 Solids Dynamic Mechanical Analyzer. Disc-shaped specimens of mastic were tested in parallel plate mode at a constant frequency of 1 Hz with a heating rate of 5 °C/min.

The ability of the mastic samples to recover elastically after application of constant pressure was measured as follows. Disc-shaped specimens were placed between sheets of silicone coated paper release liner. The sample with the release liner was then placed between two aluminum plates, and a pneumatic pressure of 78 psi (0.54 MPa) was applied between the plates for a time period of 30 sec. The pressure was released, the release liner was removed, and the diameter was measured immediately (dᵢₙᵢₜᵢₐₗ). The sample was allowed to rest at room temperature for 1 hour, after which the final diameter was measured (d_{final}). For elevated temperature tests, the sample was sandwiched between sheets of release liner, placed between two aluminum plates, then placed in an oven for 30 mins. Samples were removed from the oven, and a pressure of 30 psi (0.21 MPa) was immediately applied between the plates for a time period of 30 sec. After the pressure was released, the release liner was removed and the diameter was immediately measured (dᵢₙᵢₜᵢₐₗ). The sample was allowed to recover at room temperature for 1 hour, after which the final diameter was measured (d_{final}). It was observed that most of the recovery occurred within the first few minutes after removal of pressure. The percent recovery was calculated from the measured diameters using the formula: (dᵢₙᵢₜᵢₐₗ - d_{final})/(dᵢₙᵢₜᵢₐₗ).

The 180° peel strength of the mastic to various metal surfaces was measured using an MTS tensile tester at a pull rate of 12"/min. Substrates of stainless steel, copper, and lead were used, and the maximum peel force was recorded.

### Results

Electrical test results are provided in Table 2.

**TABLE 2.**

| **EXAMPLE** | **DIELECTRIC CONSTANT, κ** | **DIELECTRIC Loss, TANδ** |
|---|---|---|
| 1* | 5.15 | 0.046 |
| 2* | 5.51 | 0.046 |
| 3* | 8.1 | 0.088 |
| 4* | 19.5 | 0.31 |
| 5* | 12.00 | 0.14 |

| | | |
|---|---|---|
| *: not according to present invention | | |

The oil absorption of Mastic Example 3 was determined to be 0.20% by weight. Low oil absorption is a positive attribute of a mastic material for PILC applications. In comparison, some materials (such as silicas) absorb as much as 10-50% oil.

Mastic Example 5 was used in a PILC 3-core splice to seal the crotch area as well as the ends of a 3-way boot. The splice passed both the short-term and long-term tests according to IEEE-404.

DMA test results for Mastic Examples 6 and 7 are provided in Table 3, which compares values of the elastic modulus (G') for the mastic sample containing PTFE (Example 7) and the mastic sample without PTFE (Example 6.) At temperatures between 30 and 70°C, Example 7 demonstrated a higher elastic modulus than Example 6. However, at temperatures between 80 and 190°C, G' values for Examples 6 and 7 were similar.

**TABLE 3.**

| **TEMPERATURE, °C** | **EXAMPLE 6* G', KPa** | **EXAMPLE 7 G',KPa** | **G' (EXAMPLE 7)/ G' (EXAMPLE 6)** |
|---|---|---|---|
| 30 | 86.9 | 105 | 1.21 |
| 50 | 76.7 | 90.2 | 1.18 |
| 70 | 56.8 | 61.5 | 1.08 |
| 80 | 49.2 | 49.9 | 1.01 |
| 90 | 43.0 | 43.2 | 1.00 |
| 110 | 33.5 | 33.4 | 0.998 |
| 130 | 25.5 | 26.0 | 1.02 |
| 150 | 18.5 | 19.2 | 1.04 |
| 170 | 14.7 | 14.5 | 0.983 |
| 190 | 12.6 | 12.2 | 0.970 |

Elastic recovery test results for Mastic Examples 6 and 7 are provided in Table 4. At every temperature tested, Example 7 (which contains PTFE) demonstrated a higher rate of recovery than Example 6 (which does not contain PTFE).

**TABLE 4.**

| **EXAMPLE** | **PTFE, WT %** | **TEMP, °C** | **PRESSURE, PSI (MPA)** | **D_{lNITIAL}, IN (CM)** | **D_{FINAL}, IN (CM)** | **RECOVERY, %** |
|---|---|---|---|---|---|---|
| 6* | 0 | 23 | 78 (0.54) | 1.92 (4.88) | 1.71 (4.34) | 10.9 |
| 6* | 0 | 60 | 30 (0.21) | 2.03 (5.16) | 1.87 (4.75) | 7.9 |
| 6 | 0 | 80 | 30 (0.21) | 2.07 (5.26) | 1.90 (4.83) | 8.2 |
| 6 | 0 | 100 | 30 (0.21) | 2.13 (5.41) | 1.96 (4.98) | 8.0 |
| 7 | 5.43 | 23 | 78 (0.54) | 1.88 (4.78) | 1.53 (3.89) | 18.6 |
| 7 | 5.43 | 60 | 30 (0.21) | 2.02 (5.13) | 1.80 (4.57) | 10.9 |
| 7 | 5.43 | 80 | 30 (0.21) | 2.07 (5.26) | 1.84 (4.67) | 11.1 |
| 7 | 5.43 | 100 | 30 (0.21) | 2.12 (5.38) | 1.86 (4.72) | 12.2 |

| | | | | | | |
|---|---|---|---|---|---|---|
| *: not according to present invention | | | | | | |

The 180° peel strength measurements of Mastic Example 5* to stainless steel, copper, and lead are provided in Table 5.

**TABLE 5.**

| **SUBSTRATE** | **PEEL STRENGTH, OZ/INCH** | **PEEL STRENGTH, KG/M** |
|---|---|---|
| Stainless Steel | 3.7 | 4.1 |
| Copper | 7.4 | 8.3 |
| Lead | 96 | 107 |

## Claims

1. A sealing material comprising:
20 to 70 wt% acrylate rubber component;
10 to 50 wt% rheological filler component;
5 to 40 wt% tackifier component;
5 to 30 wt% plasticizer component;
0.5 to 5 wt% antioxidant component;
Up to 20 wt% dielectric filler component; and
5 to 20 wt% fluorinated thermoplastic component, wherein the fluorinated thermoplastic component is polytetrafluoroethylene and wherein polytetrafluoroethylene is in the form of powder.

2. The sealing material of claim 1 wherein the acrylate rubber component is comprised of monomers or copolymers of acrylic acid esters.

3. The sealing material of claim 1 wherein the acrylate rubber is selected from the group consisting of methyl acrylate, ethyl acrylate, propyl acrylate, butyl acrylate, pentyl acrylate, 2-ethylhexyl acrylate, octyl acrylate, cyanoethyl acrylate; methoxyethyl acrylate, ethoxyethyl acrylate, butoxyethyl acrylate, ethoxypropyl acrylate, and combinations thereof.

4. The sealing material of claim 1 further comprising a crosslinking monomer in the acrylate rubber component.

5. The sealing material of claim 4 wherein the crosslinking monomer is selected from the group consisting of vinyl chloroacetate, chloroethyl vinyl ether, allyl chloroacetate, glycidyl acrylate, glycidyl methacrylate, and allyl glycidyl ether.

6. The sealing material of claim 1 wherein the rheological filler is selected from the group consisting of clay, calcium carbonate, talc, inorganic silicates, and silica.

7. The sealing material of claim 1 wherein the dielectric filler is selected from the group consisting of conducting carbon black, non-conducting carbon black, and mixtures thereof.

8. The sealing material of claim 1 wherein the tackifier is selected from the group consisting of terpene resins, terpene phenolic resins, and alpha-pinene phenol resins.

9. The sealing material of claim 1 comprising 25 to 40 wt% acrylate rubber component.

10. The sealing material of claim 1 comprising 15 to 40 wt% rheological filler component.

11. The sealing material of claim 1 comprising 10 to 30 wt% tackifier component.

12. The sealing material of claim 1 comprising 10 to 20 wt% plasticizer component.

13. The sealing material of claim 1 comprising 0.5 to 1 wt% antioxidant component.

14. The sealing material of claim 1 comprising up to 10 wt% dielectric filler component.

15. The sealing material of claim 1 having oil absorption of less than 5 wt% at 90°C for four days, in particular less than 1 wt% at 90°C for four days.

## Patentansprüche

1. Dichtungsmaterial, umfassend:
20 bis 70 Gew.-% Acrylatkautschukbestandteil;
10 bis 50 Gew.-% rheologischer Füllstoffbestandteil;
5 bis 40 Gew.-% Klebrigmacherbestandteil;
5 bis 30 Gew.-% Weichmacherbestandteil;
0,5 bis 5 Gew.-% Antioxidans-Bestandteil;
bis zu 20 Gew.-% dielektrischer Füllstoffbestandteil; und
5 bis 20 Gew.-% fluorierter thermoplastischer Bestandteil, wobei der fluorierte thermoplastische Bestandteil Polytetrafluorethylen ist und wobei Polytetrafluorethylen in Form von Pulver vorliegt.

2. Dichtungsmaterial nach Anspruch 1, wobei der Acrylatkautschukbestandteil Monomere oder Copolymere von Acrylsäureestern umfasst.

3. Dichtungsmaterial nach Anspruch 1, wobei der Acrylatkautschuk ausgewählt ist aus der Gruppe bestehend aus Methylacrylat, Ethylacrylat, Propylacrylat, Butylacrylat, Pentylacrylat, 2-Ethylhexylacrylat, Octylacrylat, Cyanoethylacrylat; Methoxyethylacrylat, Ethoxyethylacrylat, Butoxyethylacrylat, Ethoxypropylacrylat und Kombinationen davon.

4. Dichtungsmaterial nach Anspruch 1, ferner umfassend ein vernetzendes Monomer in dem Acrylatkautschukbestandteil.

5. Dichtungsmaterial nach Anspruch 4, wobei das vernetzende Monomer ausgewählt ist aus der Gruppe bestehend aus Vinylchloracetat, Chlorethylvinylether, Allylchloracetat, Glycidylacrylat, Glycidylmethacrylat und Allylglycidylether.

6. Dichtungsmaterial nach Anspruch 1, wobei der rheologische Füllstoff ausgewählt ist aus der Gruppe bestehend aus Ton, Calciumcarbonat, Talkum, anorganischen Silikaten und Siliciumdioxid.

7. Dichtungsmaterial nach Anspruch 1, wobei der dielektrische Füllstoff ausgewählt ist aus der Gruppe bestehend aus leitendem Ruß, nichtleitendem Ruß und Mischungen davon.

8. Dichtungsmaterial nach Anspruch 1, wobei der Klebrigmacher ausgewählt ist aus der Gruppe bestehend aus Terpenharzen, Terpenphenolharzen und alpha-Pinenphenolharzen.

9. Dichtungsmaterial nach Anspruch 1, das 25 bis 40 Gew.-% Acrylatkautschukbestandteil umfasst.

10. Dichtungsmaterial nach Anspruch 1, das 15 bis 40 Gew.-% rheologischen Füllstoffbestandteil umfasst.

11. Dichtungsmaterial nach Anspruch 1, das 10 bis 30 Gew.-% Klebrigmacherbestandteil umfasst.

12. Dichtungsmaterial nach Anspruch 1, das 10 bis 20 Gew.-% Weichmacherbestandteil umfasst.

13. Dichtungsmaterial nach Anspruch 1, das 0,5 bis 1 Gew.-% Antioxidans-Bestandteil umfasst.

14. Dichtungsmaterial nach Anspruch 1, das bis zu 10 Gew.-% dielektrischen Füllstoffbestandteil umfasst.

15. Dichtungsmaterial nach Anspruch 1 mit einer Ölabsorption von weniger als 5 Gew.-% bei 90 °C für vier Tage, insbesondere weniger als 1 Gew.-% bei 90 °C für vier Tage.

## Revendications

1. Matériau de scellement comprenant :
20 à 70 % en poids de composant de caoutchouc acrylate ;
10 à 50 % en poids de composant de charge rhéologique ;
5 à 40 % en poids de composant poisseux ;
5 à 30 % en poids de composant plastifiant ;
0,5 à 5 % en poids de composant antioxydant ;
jusqu'à 20 % en poids de composant de charge diélectrique ; et
5 à 20 % en poids de composant thermoplastique fluoré, dans lequel le composant thermoplastique fluoré est du polytétrafluoréthylène et dans lequel le polytétrafluoréthylène est sous la forme de poudre.

2. Matériau de scellement selon la revendication 1, dans lequel le composant de caoutchouc acrylate est constitué de monomères ou copolymères d'esters d'acide acrylique.

3. Matériau de scellement selon la revendication 1, dans lequel le caoutchouc acrylate est choisi dans le groupe constitué d'acrylate de méthyle, acrylate d'éthyle, acrylate de propyle, acrylate de butyle, acrylate de pentyle, acrylate de 2-éthylhexyle, acrylate d'octyle, acrylate de cyanoéthyle ; acrylate de méthoxyéthyle, acrylate d'éthoxyéthyle, acrylate de butoxyéthyle, acrylate d'éthoxypropyle, et des combinaisons de ceux-ci.

4. Matériau de scellement selon la revendication 1, comprenant en outre un monomère de réticulation dans le composant de caoutchouc acrylate.

5. Matériau de scellement selon la revendication 4, dans lequel le monomère de réticulation est choisi dans le groupe constitué de chloroacétate de vinyle, éther vinylique de chloroéthyle, chloroacétate d'allyle, acrylate de glycidyle, méthacrylate de glycidyle, et éther glycidylique d'allyle.

6. Matériau de scellement selon la revendication 1, dans lequel la charge rhéologique est choisie dans le groupe constitué d'argile, carbonate de calcium, talc, silicates inorganiques et silice.

7. Matériau de scellement selon la revendication 1, dans lequel la charge diélectrique est choisie dans le groupe constitué de noir de carbone conducteur, noir de carbone non conducteur, et des mélanges de ceux-ci.

8. Matériau de scellement selon la revendication 1, dans lequel l'agent poisseux est choisi dans le groupe constitué de résines terpéniques, résines terpène-phénoliques, et résines alpha-pinène phénol.

9. Matériau de scellement selon la revendication 1, comprenant 25 à 40 % en poids de composant de caoutchouc acrylate.

10. Matériau de scellement selon la revendication 1, comprenant 15 à 40 % en poids de composant de charge rhéologique.

11. Matériau de scellement selon la revendication 1, comprenant 10 à 30 % en poids de composant poisseux.

12. Matériau de scellement selon la revendication 1, comprenant 10 à 20 % en poids de composant plastifiant.

13. Matériau de scellement selon la revendication 1, comprenant 0,5 à 1 % en poids de composant antioxydant.

14. Matériau de scellement selon la revendication 1, comprenant jusqu'à 10 % en poids de composant de charge diélectrique.

15. Matériau de scellement selon la revendication 1, ayant une absorption d'huile inférieure à 5 % en poids à 90 °C pendant quatre jours, en particulier inférieure à 1 % en poids à 90 °C pendant quatre jours.
